# NEW EUROPEAN PATENT SPECIFICATION

(11) **EP 1 592 720 B2**
(45) Date of publication and mention of the opposition decision: **30.06.2010**
(45) Mention of the grant of the patent: 22.11.2006
(21) Application number: 04708225.0
(22) Date of filing: 04.02.2004
(51) Int. Cl.: C08F 255/02, C08F 8/42

(54) **SILANE MOISTURE CURED HEAT RESISTANT FIBERS MADE FROM POLYOLEFIN ELASTOMERS**
SILAN-FEUCHTIGKEITSGEHÄRTETE WÄRMEBESTÄNDIGE FASERN AUS POLYOLEFIN-ELASTOMEREN
FIBRES RESISTANTES A LA CHALEUR, DURCIES A L'HUMIDITE, A BASE DE SILANE, CONSTITUEES D'ELASTOMERES POLYOLEFINIQUES

(30) Priority: 05.02.2003 US 445116 P
(43) Date of publication of application: 09.11.2005
(73) Proprietor: DOW GLOBAL TECHNOLOGIES INC., Midland MI 48674 (US)
(72) Inventor: WALIA, Parvinder, S., Midland, MI 48640 (US); PATEL, Rajen, M., Lake Jackson, TX 77566 (US); KLIER, John, Midland, MI 48642 (US); WEAVER, John, D., Lake Jackson, TX 77566 (US); LADIKA, Mladen, Midland, MI 48642 (US); ESSEGHIR, Mohamed, Monroe Township, NJ 08831 (US); COGEN, Jeffrey, N., Flemington, NJ 08822 (US)
(74) Representative: Hayes, Adrian Chetwynd
(86) International application number: PCT/US2004/003241
(87) International publication number: WO 2004/072135

(56) References cited:
- EP-A- 0 300 718
- US-A- 4 529 750
- US-A- 5 741 858
- M. HOFFMANN ET AL.: 'Schmelzspinnen mit dem Doppelschneckenextruder' KAUTSCHUK GUMMI-KUNSTSTOFFE vol. 53, no. 11, 2000, pages 632 - 637

## Description

The present invention relates to an improved process for crosslinking polyolefin polymers. More particularly the invention relates to an improved process for manufacturing silane grafted polyolefin elastomers to produce crosslinked fibers or films. The invention relates to the use of specific ratios of silane to peroxide functionality and levels of peroxide used. In another aspect, the invention relates to an improved process for crosslinking ethylene polymers wherein a curing catalyst is applied to the surface of a shaped article.

For many applications it is desired to introduce chemical linkages between the polymeric molecular chains which constitute the polymer, during or preferably following the shaping or molding process. These chemical linkages are generally known as "crosslinks". Crosslinks can be introduced between different molecular chains of polyolefins by a number of mechanisms, one of which is to graft to the individual polymer backbones or chains that constitute the bulk polymer, a chemically reactive compound in such a manner that the grafted compound on one backbone may subsequently react with a similar grafted compound on another backbone to form a crosslink. The silane crosslinking process is an example of this method.

The process of silane-grafting and subsequent crosslinking involves first grafting an unsaturated hydrolyzable silane onto the backbone of the polymer and then subsequently hydrolyzing the compounds and allowing the formation of crosslinks. The grafting is typically achieved in a reactive extrusion step using a reactive grafting package, which may include an unsaturated silane and a free radical initiator (for example a peroxide or an azo compound). Current reactive grafting packages also typically include a catalyst for the hydrolysis and crosslinking reactions. Although not intending to be bound by theory, it is believed that the free radical initiator serves to extract hydrogen from the polymeric molecular backbone, facilitating the grafting of the unsaturated silane. The silanes may be grafted to a suitable polyolefin either before or during a shaping or molding operation. The crosslinking or "curing" reaction then may advantageously take place following the shaping or molding step, typically by reaction between the grafted silane groups and water from the atmosphere, a sauna, or from a water bath. Common catalysts used to promote the curing include acids, bases, organic titanates, zirconates and complexes and carboxylates of lead, cobalt, iron, nickel, zinc and tin. In order to reduce premature crosslinking during processing of the silane-grafted polymer, a "slow" catalyst such as tin is typically used, with tin carboxylates such as dibutyltin dilaurate and stannous octoate generally preferred in the prior art. These catalysts are typically added to the resin prior to shaping, such that the catalyst is present during the grafting process or shortly thereafter. While these catalysts are effective for promoting the crosslinking reaction, the catalyst residue may give rise to environmental, health and safety concerns in certain applications.

After grafting, the polymer is typically molded or shaped into a finished article. These articles include molded articles, foams, films and fibers. When the molding or shaping process is carried out at elevated temperatures some crosslinking typically occurs. In some cases this crosslinking during the shaping process may be undesirable. For example, when the polymer is shaped into a fiber using typical spinning lines, crosslinking will lead to increased rates of fiber breaks, especially at higher line speeds.

In order to prepare fibers economically, the silane grafted polyolefin resins must be spinnable at high line speeds with minimal fiber breaks. This need must be balanced against the need for sufficient levels of crosslinking in the final product. Crosslinking of the fibers gives the fiber heat resistance, which, for example, allows the fiber to be used in fabrics that are subjected to elevated temperatures in processing or cleaning. Heat resistance allows the fiber to maintain its shape and integrity even at temperatures above the crystalline melting point of the fiber. Crosslinking also provides high temperature elastic recovery.

Conventional methods of balancing the interests of spinnability versus sufficient crosslinking in the final product involved the use of slower curing catalysts, such that crosslinking was minimized during the shaping step. It has also been suggested that in order to improve spinnability the resin should have a lower starting molecular weight. Alternatively, it has been suggested that inhibitors such as styrene monomer can be used to minimize the undesired chain coupling reactions. However, these inhibitors result in environment, health and safety issues, when the fiber is intended for public use such as in apparel applications.

DE 19609419 A1 discloses an elastic fiber made from polyethylene using silane crosslinking chemistry. This reference teaches adding 15-30 percent by weight of a paraffin plasticizer for reducing viscosity during melt processing and lowering the hardness of the fiber products. Such paraffin plasticizers have also been found to reduce the mechanical properties of the fibers.

DE 19823142 Al claims the silane grafting of blends of at least two ethylene octene copolymers in the presence of styrene. The blends were used to overcome the disadvantages of the paraffin plasticizer and the styrene was used to minimize undesired coupling reactions. However, the crosslinked fibers exhibit low tenacity due to the low molecular weight component of the blend, and suffer the disadvantages associated with the use of styrene as discussed previously.

US 5,741,858, US 5,824,718 and US 6,048,935 disclose silane grafted substantially linear ethylene polymers which are useful in various applications including elastic fiber and exhibit superior elastic behaviour at elevated temperatures. These references teach using weight ratios of silane crosslinking compound to radical initiators in the range of 10:1 to 30:1.

US 5,883,144, US 6,103,775 and US 6,316,512 also teach silane grafted polyolefin articles, but do not teach preferred ratios of silane to peroxide functionality for optimum fiber spinnability.

EP-A-300,718 discloses a process for producing a modified ultra-high molecular weight polyolefin composition which comprises mixing powder of an ultra-high molecular weight polyolefin (A) having an intrinsic viscosity of at least 5 dl/g, a flowability improver (B) having a melting point lower than the melting point of the ultra-high molecular weight polyolefin (A), a monomer (C) having an olefinically unsaturated bond and a radical initiator (D) with stirring at the melting point of the flowability improver (B) or a higher temperature but below the melting point of the ultra high molecular weight polyolefin (A), and then melt-kneading them at the melting point of the ultra high molecular weight polyolefin (A) or a higher temperature to react the monomer (C) with the ultra high molecular weight-polyolefin (A).

Accordingly, it is desired to develop a process for crosslinking polyolefin materials such that the grafting levels in the polyolefin material can be optimized. It is particularly desired to have a process such that the material can be used to make fibers under the high speeds of typical production equipment while maintaining the sufficient crosslinking levels in the final product so that the preferred mechanical and thermal properties are maintained. It is further desired that the process allows the use of resins of varying molecular weights, minimize the use of additives such as styrene, and further minimize the use of certain catalysts:

It has been discovered that these and other advantages can be achieved by controlling the ratio of silane to peroxide functionality in the grafting reaction.

Accordingly, the present invention provides a process for crosslinking a polyolefin polymer which includes grafting a silane material which can be described by the formula R-Si-R'₃, where R is an ethylenically unsaturated group, and R' is a hydrolyzable group, onto the polyolefin based polymer in the presence of a free radical generating initiator material, the improvement comprising:
using an effective molar ratio of silane material to free radical of 45:1 or greater in the grafting reaction;
said process further comprising the steps of:
   a) spinning the silane-grafted polyolefin polymer into fibers;
   b) applying a material to the fiber which is capable of catalysing a hydrolysis reaction between the silane moieties grafted to the polymer and moisture, said material being a zirconate or titanate compound;
   and c) contacting the fiber with moisture under conditions sufficient to promote a crosslinking reaction.

In particular, it was found that optimal results could be achieved when the molar ratio of silane to free radicals (preferably alkoxy radicals derived from organic peroxides) used was 45 or higher, preferably 50 or higher. The number of moles of free radicals is determined by calculating the theoretical number of moles of free radicals generated from the free radical-generating precursor compound. For example, the molar amount of free radicals that can be generated from 2.0 grams of 2,5-dimethyl-2,5-di(tert-butylperoxy)hexane is 0.028 moles. (The molecular weight of 2,5-dimethyl-2,5-di(tert-butylperoxy)hexane is 290.45 g/mole, each molecule contains two dialkylperoxy groups, and each dialkylperoxy group forms two alkoxy radicals.) It was also found that optimal results could be achieved when the level of radicals used is less than 500 micromoles per 100 grams of polymer, more preferably less than 450 micromoles per 100 grams of polymer.

It has also been discovered that the curing catalyst can be added after shaping, such that minimal crosslinking occurs during the shaping step. As the catalyst is added to the surface of the shaped article, this process seems to be particularly well suited for articles with a high surface area to weight ratio, such as fibers or films. In a fiber spinning process, the catalyst can be added using spin finish applicators. It is preferred that this process be used in conjunction with a catalyst which ensures cure at or near room temperature, as formed fibers may not be further exposed to high temperatures. It was discovered that certain titanate and zirconate catalysts (for example certain TYZOR^{™} (trademark of E.I. Du Pont de Nemours & Co) catalysts and certain KEN-REACT^{™} (trademark of Kenrich Petrochemicals, Inc.) catalysts) are quite effective in this application, since they provide fast cure at or near room temperature in the presence of ambient humidity, or in a water bath or sauna, when applied to the article surface.

Change in melt index (measured relative to the starting polyethylene elastomer resin) upon silane grafting is a measure of the undesired, premature chain coupling. Accordingly, by judicious control of the grafting process it is possible to minimize premature chain coupling, as will be evidenced by a minimal reduction in the MI.

The grafted polymer of the present invention is particularly well suited for use in fibers. In this application the grafted polymer can be shaped into fibers using spinning lines at speeds of greater than 400 meters per minute with few fiber breaks. The grafted polymer fiber can then be crosslinked, preferably by application of catalyst and exposure to moisture from the atmosphere or via a water bath or sauna.

In another aspect of the invention, a curing catalyst can be blended with spin finish and applied to the spun fiber using a typical spin finish applicator known in the art, or alternatively the catalyst can be added by itself using a spin finish applicator.

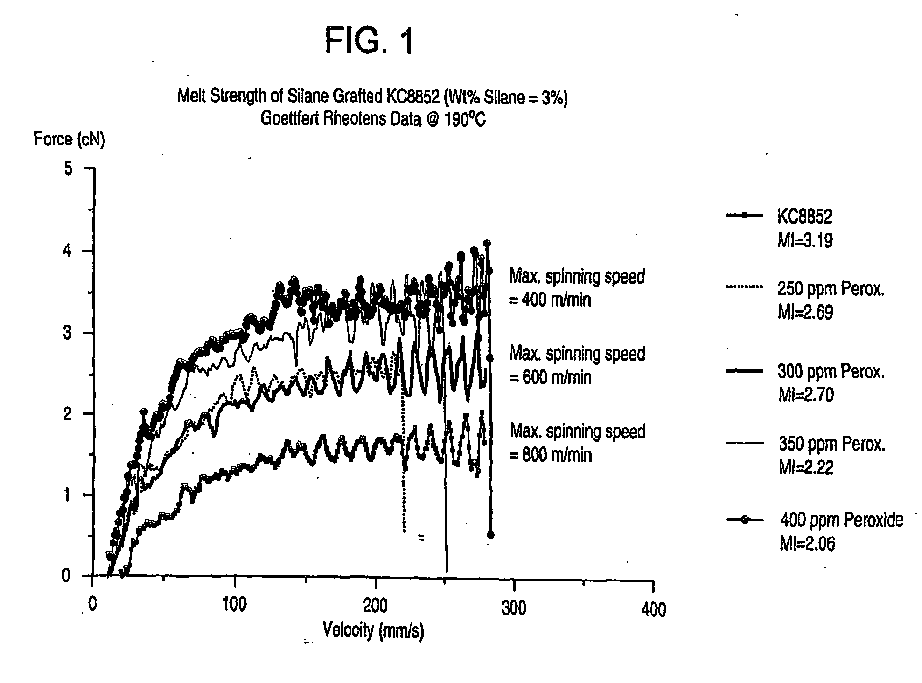

FIG 1 is a plot indicating melt strength for silane grafted polymer with varying levels of peroxide.

The present invention can be used to crosslink any polyolefin based material or blends. It is particularly suited for use with the ethylene interpolymers described in WO 99/60060. These materials are made using single site catalysts known in the art, for example in US 5,026,798 and US 5,055,438. Suitable polymers includes those interpolymers of ethylene with at least one other monomer, characterized by having a polymer density of less than 0.90 g/cm³ before crosslinking. For use in fibers, in order to obtain the preferred tenacity, the polyolefin polymer should ideally have a starting melt index from 1 to 10 as measured by ASTM D1238 condition E (190° C, 2.16 kg load). More preferably, the polyolefin material should have a starting melt index of 8 or less, and most preferably 6 or less. Preferred polymers for use with the present invention include AFFINITY^{™} EG 8200, (5 MI, 0.87g/cm3) and AFFINITY^{™} KC 8852 (3 MI, 0.875g/cm3) (AFFINITY is a trademark of The Dow Chemical Company) and blends thereof.

Suitable silanes for the silane crosslinking process include silanes having an ethylenically unsaturated hydrocarbyl group and a hydrolyzable group, particularly the silanes of the type which are taught in US patent 5,824,718. It should therefore be understood that as used in this disclosure, the term "silane" includes silanes that can be described by the formula R-Si-R'₃, where R is an ethylenically unsaturated hydrocarbyl group, such as, for example, vinyl, allyl, isopropenyl, butenyl, cyclohexenyl, acryloxyalkyl, or methacryloxyalkyl, and R' is a hydrolyzable group, such as, for example, a hydrocarbyloxy, hydrocarbonyloxy, or hydrocarbylamino group. Examples of hydrolyzable groups include methoxy, ethoxy, propoxy, butoxy, formyloxy, acetoxy, propionyloxy, and alkylamino or arylamino groups. Preferred silanes for use in the present invention are vinyltrimethoxysilane (VTMOS) and vinyltriethoxysilane (VTEOS). Typically,the silane or a combination of silanes, is added in an amount such that silane level in the grafted polymer is 3 percent by weight or less, more preferably 2 percent or less by weight in the grafted polymer. There is preferably at least 0.1 percent by weight silane in the grafted polymer. The level of silane in the grafted polymer can be determined by first removing the unreacted silane from the polymer and then subjecting the resin to neutron activation analysis of silicon. The result, in weight percent silicon, can be converted to weight percent grafted silane.

Suitable peroxides for use in the present invention include any peroxide capable of facilitating the grafting reaction. Furthermore, while the term peroxide is used throughout this disclosure it should be understood that any compound that can generate free radicals capable of abstracting hydrogen and which has a decomposition temperature above 50° C would be suitable. This includes dicumyl peroxide, di-tert-butyl peroxide, tert-butyl perbenzoate, tert-butyl peroctoate, tert-butyl peracetate, benzoyl peroxide, cumene hydroperoxide, methyl ethyl ketone peroxide, lauryl peroxide and combinations of these. LUPEROX^{™} 101 (trademark of the Pennwalt Corporation) or its equivalent 2,5-dimethyl-2,5-di(tert-butylperoxy)hexane is the most preferred peroxide for use in the invention.

The polymer used in the present invention preferably has a melting temperature below the decomposition temperature of the peroxide. In this way, the peroxide and silane can be uniformly distributed in the polymer melt prior to grafting without degradation of the peroxide material. Subsequently raising the temperature in the extruder with appropriate residence time will then facilitate the grafting of this uniformly distributed silane. As a result, the process of the present invention will have a more uniform distribution of silane and peroxide, and hence a lower degree of premature chain coupling for a given formulation. Using low-melting metallocene polymers heightens this advantage.

The level of peroxides used in the present invention is preferably such that less than 500 micromoles, more preferably less than 450 micromoles, most preferably less than 400 micromoles of free radical per 100 grams of polymer is provided. Whatever the level of peroxide used, however, it is important for the present invention that the effective molar ratio of silane to alkoxy radicals used in the grafting reaction be maintained at 45:1 or higher, preferably 50:1 or higher. For example, in the case of LUPEROX^{™} 101 or its equivalent, the weight ratio of VTMOS to peroxide used in the grafting reaction should be maintained at above 100:1 (which corresponds to 50:1 molar ratio of VTMOS to alkoxy radicals) or higher. It should be readily understood by one skilled in the art that it may be possible to include an inhibitor, or material capable of acting as a radical scavenger, in the reaction mixture. In this way, while the initial molar ratio of silane to alkoxy radicals may be lower than the desired ratio, the inhibitor will react with some of the alkoxy radicals, and/or some of the polymer radicals, lowering the number of radicals available for undesired polymer crosslinking, bringing the effective ratio back within the desired level.

While not intending to be bound by theory, it is thought that at the specified effective ratios, an excess of silane would be available to trap radicals on the polymer backbone and thus minimize peroxide induced chain coupling (polymer/polymer recombination).

Preferably the polyolefin material after grafting will have melt index which is at least 80 percent, more preferably at least 90 percent, of the melt index of the polymer before grafting. For example, if the melt index of the polymer prior to grafting is 3, then the melt index of the polymer after grafting is preferably at least 2.4, more preferably at least 2.7. It should be understood that it is possible for the melt index to increase after the grafting reaction.

It should also be readily recognized that other additives might also be added as is generally known in the art. Examples of such additives include antioxidants, ultraviolet light stabilizers, thermal stabilizers, pigments or colorants, processing aids (such as fluoropolymers), crosslinking catalysts, flame retardants, fillers, foaming agents, etc. Known antioxidants include hindered phenols, phosphates, and polymerized trimethyldihydroquinoline. In particular the addition of hindered phenols such as CYANOX^{™} 1790 (trademark of the CYTEC Corporation) are known to impart long term heat aging stability to fibers when added at the preferred levels of 500 to 5000 ppm. Ideally these additives are added after the grafting reaction is complete so as not to interfere with the grafting reaction.

The grafting reaction of the present invention can be advantageously carried out using an extruder such as a twin-screw extruder. The temperature profile and the screw design of the extruder can be set such that there is sufficient time for mixing the silane and peroxide with the polymer prior to reaching conditions at which substantial grafting reaction takes place. In this way the grafted polymer can be formed. It is also preferable for commercial scale-up purposes, that each step of the process be designed such that it accomplishes its intended purpose without interfering adversely with the other steps. For example, polymer temperature control through external barrel temperature settings becomes more difficult in large machines as compared to lab-scale extruders. An appropriate screw design would therefore have a mild mixing step to ensure polymer-silane-peroxide melt mixture homogeneity at a relatively low temperature (for example below 180°C, more preferably below 160°C) followed by a more intensive mixing section designed to reach the desired time-temperature combination for optimum grafting. The total mixing time in the extruder at the end of the reaction can be 30 seconds or less, more preferably 20 seconds or less, with temperatures of 190°C or higher depending on the polymer melt index. It is generally preferred that the temperature be below 250°C.

It is generally preferred that any unreacted silane material is removed. Any method capable of reducing the unreacted silane levels can be used, however the preferred method is to apply vacuum at an appropriately designed section of the extruder, causing the unreacted silane to vaporize and leave the melted grafted polymer. Such removal method can be assisted with the injection of an inert stripping gas such as nitrogen or carbon dioxide prior to the application of vacuum, in order to improve the devolatization process. It is preferred that the level of ungrafted silane is less than 2000 ppm.

Coming from the extruder, the grafted polymer can then be formed into shapes suited for storage or later processing such as pellets, chips, powders, granules or the like. It is also possible to form films, fibers or other shaped articles directly from the extruder in the grafting step.

Antioxidants can be added, preferably towards the end of the extruder. This can advantageously be accomplished by controlled feeding of the antioxidants in solid or liquid form to a feed port in the extruder following the devolatization step. The additives would then be melt compounded with the grafted polymer. Alternatively the antioxidants can be dry blended with the pellets, granules, etc. afterwards. It is also possible, but not preferred, to add curing catalyst to the polymer during the grafting step.

It is also preferred to pass the grafted polymer through a melt filtration step to remove any contaminants. This can be accomplished using screen filters. For fiber spinning applications, it is preferred that the screen filters be below 35 microns, more preferably below 25 microns.

The grafted polymer pellets (or other form) can optionally be dried, preferably such that the moisture level in the pellets is less than 100 ppm. This can be accomplished using a fluidized bed dryer with air at controlled temperature and humidity. In this way the curing or crosslinking reaction can be minimized until the polymer has been shaped, especially if the curing catalyst has already been added. Similarly, the dry pellets should be stored in an environment such as a moisture barrier bag in order to minimize any reintroduction of moisture to the grafted polymer.

The grafted pellets can then be shaped into fibers. The grafted polymers of the present invention are particularly well suited for forming fibers as in these articles polymer uniformity, branching and crosslinking levels are more critical. Fibers from the grafted polymer of the present invention can be prepared on high-speed (greater than 400 meters/minute) fiber spinning lines with few or no fiber breaks.

Curing catalysts suitable for use in the present invention include zirconate and titanate compounds such as titanium (IV) bis(acetylacetonate) diisopropoxide, available as TYZOR^{™} GBA (a trademark of E.I. DuPont de Nemours and Company) and as TYZOR^{™} AA, titanium (IV) isopropoxide, available as TYZOR^{™} TPT, titanium (IV) ethoxide, titanium (IV) propoxide, titanium (IV) butoxide, titanium (IV) 2-ethylhexoxide, titanium (IV) 2-ethyl-1,3-hexanediolate, titanium (IV) bis(ethyl acetoacetato) diisopropoxide, titanium (IV) bis(triethanolamino) diisopropoxide, zirconium (IV) propoxide, zirconium (IV) butoxide, and zirconium (IV) tetrakis(acetylacetonate). Those catalysts that are preferred also include monoalkoxy titanates, such as isopropoxytris(isostearato)titanium, available as KEN-REACT^{™} TTS (a trademark of Kenrich Petrochemicals, Inc.); coordinated titanates, such as titanium (IV) bis(dioctyl phosphito-O") tetraisopropoxide, available as KEN-REACT^{™} 41B; neoalkoxy titanates, such as [2,2-bis[(2-propenyloxy)methyl]-1-butanolato-O,O',O"]tris(neodecanoato-O)titanium, available as LICA^{™} 01 (a trademark of Kenrich Petrochemicals, Inc.); and neoalkoxy zirconates, such as [2,2-bis[(2-propenyloxy)methyl]-1-butanolato-O,O',O"]tris(neodecanoato-O)zirconium, available as NZ^{™} 01 (a trademark of Kenrich Petrochemicals, Inc.). Most preferred are titanium (IV) bis(acetylacetonate) diisopropoxide, titanium (IV) 2-ethyl-1,3-hexanediolate, and [2,2-bis[(2-propenyloxy)methyl]-1-butanolato-O,O',O"]tris(neodecanoato-O)zirconium. The catalyst level is typically less than 1.5 percent by weight, more preferably 1.0 percent by weight or less based on the weight of the fiber.

When prevention of crosslinking prior to forming the article is a concern, such as when forming fibers, then it is preferred that the catalyst is added after the article has been formed. In the case of fibers it is preferred that curing catalyst be added to the spun polymer fiber on line using spin finish applicators. These applicators are commonly known in the art. In this way the catalyst can be added either alone or blended together with a spin finish chosen for the fiber. In general, it is preferable to apply the catalyst and spin finish together as a solution or stable emulsion. In some cases, it may be preferable to add a co-solvent to solubilize the catalyst and spin finish. In other cases, when the catalyst and the spin finish do not form a solution or stable emulsion, or when they are otherwise incompatible, it may be preferable to apply them separately to the fiber using separate sets of spin finish applicators. Addition of the catalyst after the fiber formation helps to minimize the amount of crosslinking that occurs prior to spinning the fiber. Despite the absence of the added catalyst until after the fiber formation, it is still preferred that steps be taken to avoid prolonged exposure to moisture prior to forming the fiber.

Once the article such as a fiber has been formed and catalyst has been applied, the formed article is exposed to moisture and/or heat to promote the crosslinking of the fibers. This can be done using humidity from the environment, or a water bath or sauna. In the case of fibers, it is preferred that the spools of fiber be stored in a controlled high humidity atmosphere, preferably at temperatures less than 50°C. Storage for a few weeks to a few months under such conditions will enable slow crosslinking such that gel levels greater than about 30 percent by weight as determined from xylene insolubles as set out in ASTM D 2765 can be obtained. When catalyst is added to the surface of the formed article, such as in the preferred case for fiber formation, it is generally advantageous to allow up to one or two days for the catalyst to penetrate the formed article before the article is exposed to high humidity conditions. This is especially preferable in cases where the catalyst can be degraded by contact with moisture, such as when organic titanates or zirconates are used.

Such fibers exhibit a tenacity or tensile strength at break of at least 0.6 gm/denier. The fibers also exhibit an elongation to break of at least 400 percent.. It should also be understood that two or more of these fibers might advantageously be combined to form a multifilament fiber. Fibers made from crosslinked polyolefin according to the present invention can be used with other fibers like cotton, wool, silk, polyester (for example PET or PBT), and nylon. In certain applications, particularly fibers for use in woven or knitted fabrics, it may be advantageous to wrap such fibers with another fiber. However, in other applications, such as non-woven fabrics, the fibers of the present invention are preferably not wrapped.

It should also be understood that the present invention can be used in combination with other methods of crosslinking (such as high-energy radiation) in order to improve the degree of control of the level of crosslinking in the final article.

Examples 1-5 describe embodiments of silane grafting a polymer.

### EXAMPLE 1

Silane-grafted resin is prepared by adding AFFINITY^{™} EG8200 (MI=5, 0.87 g/cc) having a target antioxidant level of 500 ppm I-1076 and 800 ppm PEPQ, together with 2.5 phr silane (VTMOS) and 250 ppm LUPEROX^{™} 101 (silane to peroxide weight ratio of 100:1; silane to alkoxy radical molar ratio of 49:1 into a Micro-18 (18mm) twin-screw extruder. The temperature profile in the extruder is 120°C, 130°C, 160°C, 210°C, 220°C, and the average residence time in the twin-screw extruder is 5 minutes. 1500 ppm IRGAFOS^{™} (trademark of Ciba Specialty Chemicals)-168 and 2000 ppm of CYANOX^{™} (trademark of the Cytec Corporation)-1790 is then dry blended into the formulation. The Melt Index of the dried resin is determined to be 4.1 using ASTM D1238 condition E (190° C, 2.16 kg load). This resin is then spun into fibers at a first godet speed of 450 m/min (winder speed of 540 m/min) for one hour without any break using 350 mesh filter.

### EXAMPLE 2

Silane-grafted resin is prepared by adding AFFINITY^{™} KC8852 (MI=3, 0.875 g/cc) having a target antioxidant level of 750 ppm I-1076 and 1200 ppm PEPQ, together with 3 phr silane (VTMOS) and 250 ppm LUPEROX^{™} 101 (silane to peroxide weight ratio of 120:1; silane to alkoxy radical molar ratio of 59:1) into a Micro-18 (18mm) twin-screw extruder. The temperature profile in the extruder is 120°C, 130°C, 160°C, 210°C, 220°C, and the average residence time in the twin-screw extruder is 5 minutes. 1500 ppm IRGAFOS^{™}-168 and 2000 ppm of CYANOX^{™}-1790 is then dry blended into the formulation. The melt index of the dried resin is determined to be 2.69, and the viscosity at 0.1 rad/sec (Poise) is 44200. This resin is then spun into fibers using a one-end spin line with Comoli^{™} elastic winder. The die diameter used is 0.9 mm, (L/D) is 2, the melt temperature is 270°C and the output rate is 2.25g/min, so that 40 denier fiber is made at 500 m/min first godet speed. The second godet speed is 525 m/min and the winder speed is set at 600 m/min. No breaks are observed after 90 minutes using 350 mesh filter.

### EXAMPLE 3

A silane-grafted resin is prepared and spun as in Example 2 except that 300 ppm of LUPEROX^{™} 101 is added (silane to peroxide weight ratio of 100:1; silane to alkoxy radical molar ratio of 49:1). The melt index of the dried resin is determined to be 2.7, and the viscosity at 0.1 rad/sec (Poise) is 44800. One break is reported over a ninety minute spinning trial.

### EXAMPLE 4 (Comparative)

A resin is prepared and spun as in Example 2 except that 350 ppm of LUPEROX^{™} 101 is added (silane to peroxide weight ratio of 86:1; silane to alkoxy radical molar ratio of 42:1). The melt index of the dried resin is determined to be 2.22, and the viscosity at 0.1 rad/sec (Poise) is 61400. At this silane to peroxide radical ratio the resin exhibited lower melt index and is not spinnable consistently (there are many fiber breaks).

### EXAMPLE 5 (Comparative)

A resin is prepared and spun as in Example 2 except that 400 ppm of LUPEROX^{™} 101 is added (silane to peroxide weight ratio of 75:1; silane to alkoxy radical molar ratio of 37:1). The melt index of the dried resin is determined to be 2.063, and the viscosity at 0.1 rad/sec (Poise) is 67400. At this silane to peroxide radical ratio the resin is not consistently spinnable even at slower (400 m/min) line speeds.

Rheotens melt strength data at 190°C on the resins of Examples 2-5, as well as ungrafted AFFINITY^{™} KC8852 (without I-168 AND C-1790) is presented in Figure 1.

### EXAMPLES 6-8

Resin is prepared by adding AFFINITY^{™} EG8200 together with 3.25 phr silane (VTEOS) and 200 ppm LUPEROX^{™} 101 (silane to peroxide weight ratio of 163:1, silane to alkoxy radical molar ratio of 62:1) into a ZSK-53 (53-mm) twin-screw extruder. The temperature profile in the extruder is 22°C, 48°C, 116°C, 194°C, 222°C, 239°C, and 275 °C. 3000 ppm of C-1790 and 1500 ppm of I-168 are then dry blended into the formulation. The melt index of the dried resin is determined to be 5.9. This resin is then spun into fibers using an eight-end line. The die diameter used is 0.7 mm, L/D is 2, the melt temperature is 270°C, and the output rate is 2.0 g/min, so that 40 denier fiber is made with the first godet speed set at 400 m/min, the second godet speed set at 425 m/min, and the winder speed set at 450 m/min. A solution of TYZOR^{™} GBA in 2-propanol is applied to the fiber through a set of spin finish applicators at rates sufficient to deposit the amounts of catalyst onto the fibers as indicated in Table 1 below. The spools are stored at room temperature in sealed polyethylene bags for two days, and then they are placed in a controlled environment chamber at 40°C and 100 percent relative humidity. After 14 days, the spools are removed from the chamber and the fibers are analyzed for gel fraction using ASTM method D 2765. The results of these analyses are shown in Table 1.

### EXAMPLE 9

The same resin as described in Examples 6-8 is spun under the same conditions as described in Example 6-8. A solution of TYZOR^{™} GBA and DELION^{™} (a trademark of Takemoto Oil and Fat Company, Ltd.) F-9535 silicone spin finish in 2-propanol is applied to the fiber through a set of spin finish applicators at a rate sufficient to deposit 1.0 wt percent of catalyst and 1.0 wt percent spin finish onto the fibers. The spools are stored at room temperature in sealed polyethylene bags for two days, and then they are placed in a controlled environment chamber at 40°C and 100 percent relative humidity. After 14 days, the spools are removed from the chamber and the fibers are analyzed for gel fraction (xylene insolubles) using ASTM method D 2765. The results of these analyses are shown in Table 1.

| **Table 1: Catalyst loading and gel fraction results for Examples 6-9.** | | |
|---|---|---|
| Example | Amount of Catalyst Applied to Fiber | Gel Fraction |
| 6 | 0.5 wt percent | 54 percent |
| 7 | 1.0 wt percent | 61 percent |
| 8 | 2.0 wt percent | 62 percent |
| 9 | 1.0 wt percent catalyst + | 59 percent |
| | 1.0 wt percent spin finish | |

### EXAMPLE 10

Twenty-five grams of the grafted resin prepared in Examples 6-9 is mixed with 500 mL of xylene, and the mixture is heated to boiling, approximately 135°C, to dissolve the resin. The solution is cooled to room temperature, and then it is poured into 2.5 L of methanol with brisk stirring to precipitate the resin. The resin is collected and dried in a vacuum oven at 50°C overnight. The silicon content of the resin is determined to be 0.27 weight percent by neutron activation analysis. This corresponds to 1.83 weight percent VTEOS.

### EXAMPLE 11

A silane-grafted resin was prepared by adding AFFINITY^{™} KC8852 (3.25 nominal MI) together with 3.0 phr silane (VTEOS) and 225 ppm LUPEROX^{™} 101 (silane to peroxide weight ratio of 133:1, silane to alkoxy radical molar ratio of 51:1) into a ZSK-58 (58-mm) twin-screw extruder. The actual barrel temperature profile of the extruder is as follows: 22°C, 118°C, 160°C, 231°C, 222°C, and 200°C. 600 ppm of Dyneon FX-5911 fluoropolymer are fed to the extruder with the resin pellets, 1500 ppm of C-1790 and 1000 ppm of I-168 are then dry blended into the formulation. The melt index of the dried resin is determined to be in the range of 3.3 to 3.4 and the amount of grafted silane is determined to be about 1.48% by wt.

The grafted resin pellets were fed to a Fourné fiber spinning extruder with two 12-end outputs, and 70-denier fiber was spun at a rate of 325 m/min. The melt temperature was 300 C. A solution of 50 wt% spin finish (LUROL^{™} 8517 (a trademark of Goulston Technologies, Inc.)) and 50 wt% crosslinking catalyst (KEN-REACT^{™} NZ01) was applied to the surface of the fiber at a rate to deposit about 0.7% catalyst, based on the fiber weight. The fiber was wound onto spools. The spools were placed in a forced air circulation oven at 35 C and 100% relative humidity. After 47 days, the gel fraction of the fibers was determined to be 50%.

## Claims

1. A process for crosslinking a polyolefin polymer which includes grafting a silane material of formula R-Si-R'₃ where R is an ethylenically unsaturated group, and R' is a hydrolysable group, onto the polyolefin based polymer in the presence of a free radical generating initiator material, the improvement comprising:
using an effective molar ratio of silane material to free radical of 45:1 or greater in the grafting reaction;
said process further comprising the steps of:
(a) spinning the silane-grafted polyolefin polymer into fibers;
(b) applying a material to the fiber which is capable of catalyzing a hydrolysis reaction between the silane moieties grafted to the polymer and moisture, said material being a zirconate or titanate compound; and
(c) contacting the fiber with moisture under conditions sufficient to promote a crosslinking reaction.

2. The process of claim 1 wherein the effective molar ratio of silane material to free radical is greater than 50:1.

3. The process of claim 1 wherein the free radical generating intitiator material is a peroxide material.

4. The process of claim 1 further comprising contacting the grafted polyolefin material with moisture under conditions suitable for forming chemical linkages between at least some silane moieties.

5. The process of claim 1 further comprising limiting the level of alkoxy radical moieties used in the grafting reaction to less than 500 micromoles per 100. grams of polymer.

6. The process of claim 1 wherein the polyolefin is spun into a fiber after the grafting reaction but prior to any substantial reaction.

7. The process of claim 1 wherein the polyolefin is a single-site catalyzed homogeneous polyolefin.

8. The process of claim 7, wherein the single-site catalyzed homogeneous polyolefin has a melt index from 1 to 10 as measured by ASTM D1238 condition E (190°C, 2,16 kg load).

9. The process of claim 3 wherein the silane, peroxide and polymer are mixed thoroughly prior to initiating the grafting reaction.

10. The process of claim 1 wherein the grafting reaction is carried out using an extruder and the temperature profile of the extruder is maintained such that the silane, peroxide and polymer are mixed thoroughly prior to initiating the grafting reaction.

11. The process of claim 1 wherein the grafted silane level is less than 3 percent by weight in the grafted polymer.

12. The process of claim 1 wherein the grafted silane level is less than 2 percent by weight in the grafted polymer.

13. The process of claim 1 wherein the silane material is selected from the group comprising VTMOS and VTEOS.

14. The process of claim 3 wherein the peroxide material is 2,5-dimethyl-2,5-di(tert-butylperoxy)hexane.

15. The process of claim 1 further comprising added antioxidants.

16. The process of claim 15 wherein the antioxidants are dry blended or melt blended with the polymer after the grafting reaction.

17. The process of claim 1 wherein the polymer is additionally partially crosslinked using a method which does not involve silane grafting.

18. The process of claim 1 wherein the polyolefin material has a melt index, as measured by ASTM D1238 condition E (190°C, 2.16kg load), after grafting which.is no lower than 80 percent of the melt index of the polyolefin material prior to grafting.

19. The process of claim 1 wherein the polyolefin material has a melt index, as measured by ASTM D1238 condition E (190°C, 2.16kg load), after grafting which is no lower than 90 percent of the melt index of the polyolefin material prior to grafting.

20. The process of claim 1 wherein the silane grafted polyolefin polymer is spun into fibers at line speeds of at least 300 meters per minute.

21. The process of claim 1 wherein the polyolefin polymer has a starting melt index between 2.5 and 10.

22. The process of claim 1 wherein step b is accomplished using a spin finish applicator.

23. The process of claim 22 wherein the material capable of catalyzing the hydrolysis reaction is first mixed with a spin finish for the fiber.

24. The process of claim 20, wherein the material capable of catalyzing the hydrolysis reaction is titanium (IV) bis(acetylacetonate) diisopropoxide; titanium (IV) tetrakis(2-ethyl-1,3-hexanediolate); or [2,2-bis(2-propenyloxy)methyl]-1-butanolato-0,0',0"]tris(neodecanoato-O)zirconium.

## Patentansprüche

1. Verfahren zum Vernetzen eines Polyolefinpolymers, welches das Aufpfropfen eines Silanmaterials der Formel R-Si-R'₃, wobei R eine ethylenisch ungesättigte Gruppe ist und R' eine hydrolysierbare Gruppe ist, auf das auf Polyolefin basierende Polymer in Gegenwart eines freie Radikale erzeugenden Initiatormaterials umfasst, wobei die Verbesserung umfasst:
Verwenden eines effektiven Molverhältnisses von Silanmaterial zu freien Radikalen von 45:1 oder mehr in der Pfropfreaktion,
wobei das Verfahren weiterhin die Schritte umfasst:
(a) Verspinnen des mit Silan bepfropften Polyolefinpolymers zu Fasern,
(b) Aufbringen eines Materials auf die Faser, welches die Fähigkeit besitzt, eine Hydrolysereaktion zwischen den auf das Polymer aufgepfropften Silanresten und Feuchtigkeit zu katalysieren, wobei das Material eine Zirkonat- oder eine Titanatverbindung ist, und
(c) Inkontaktbringen der Faser mit Feuchtigkeit unter Bedingungen, welche ausreichend sind, um eine Vernetzungsreaktion zu fördern.

2. Verfahren nach Anspruch 1, wobei das effektive Molverhältnis von Silanmaterial zu freien Radikalen größer als 50:1 ist.

3. Verfahren nach Anspruch 1, wobei das die freien Radikale erzeugende Initiatormaterial ein Peroxidmaterial ist.

4. Verfahren nach Anspruch 1, weiterhin umfassend das Inkontaktbringen des bepfropften Polyolefinmaterials mit Feuchtigkeit unter Bedingungen, welche zur Bildung chemischer Bindungen zwischen mindestens einigen Silanresten geeignet sind.

5. Verfahren nach Anspruch 1, weiterhin umfassend das Beschränken der Menge der in der Pfropfreaktion verwendeten Alkoxyradikalreste auf weniger als 500 Mikromol pro 100 Gramm an Polymer.

6. Verfahren nach Anspruch 1, wobei das Polyolefin nach der Pfropfreaktion, jedoch vor einer beliebigen substantiellen Reaktion, zu einer Faser versponnen wird.

7. Verfahren nach Anspruch 1, wobei das Polyolefin ein mittels eines Einzentren-Katalysators erhaltenes homogenes Polyolefin ist.

8. Verfahren nach Anspruch 7, wobei das mittels eines Einzentren-Katalysators erhaltene homogene Polyolefin einen Schmelzindex von 1 bis 10 aufweist, wie mittels ASTM D1238, Bedingung E (190°C, 2.16 kg Last) gemessen.

9. Verfahren nach Anspruch 3, wobei das Silan, das Peroxid und das Polymer vor Initiierung der Pfropfreaktion gründlich vermischt werden.

10. Verfahren nach Anspruch 1, wobei die Pfropfreaktion unter Verwendung eines Extruders durchgeführt wird und das Temperaturprofil des Extruders aufrechterhalten wird, so dass das Silan, das Peroxid und das Polymer vor Initiierung der Pfropfreaktion gründlich vermischt werden.

11. Verfahren nach Anspruch 1, wobei die Menge des aufgepfropften Silans im Pfropfpolymer weniger als 3 Gewichtsprozent beträgt.

12. Verfahren nach Anspruch 1, wobei die Menge des aufgepfropften Silans im Pfropfpolymer weniger als 2 Gewichtsprozent beträgt.

13. Verfahren nach Anspruch 1, wobei das Silanmaterial aus der Gruppe ausgewählt ist, welche VTMOS und VTEOS umfasst.

14. Verfahren nach Anspruch 3, wobei das Peroxidmaterial 2,5-Dimethyl-2,5-di(tert-butylperoxy)hexan ist.

15. Verfahren nach Anspruch 1, weiterhin umfassend das Hinzufügen von Antioxidantien.

16. Verfahren nach Anspruch 15, wobei die Antioxidantien mit dem Polymer nach der Pfropfreaktion trocken vermischt oder in der Schmelze vermischt werden.

17. Verfahren nach Anspruch 1, wobei das Polymer unter Verwendung eines Verfahrens, welches kein Aufpfropfen von Silan umfasst, zusätzlich teilweise vernetzt wird.

18. Verfahren nach Anspruch 1, wobei das Polyolefinmaterial nach dem Aufpfropfen einen Schmelzindex aufweist, welcher nicht unter 80 Prozent des Schmelzindex des Polyolefinmaterials vor dem Aufpfropfen liegt, wie mittels ASTM D1238, Bedingung E (190°C, 2.16 kg Last) gemessen.

19. Verfahren nach Anspruch 1, wobei das Polyolefinmaterial nach dem Aufpfropfen einen Schmelzindex aufweist, welcher nicht unter 90 Prozent des Schmelzindex des Polyolefinmaterials vor dem Aufpfropfen liegt, wie mittels ASTM D1238, Bedingung E (190°C, 2.16 kg Last) gemessen.

20. Verfahren nach Anspruch 1, wobei das mit Silan bepfropfte Polyolefinpolymer mit Anlagengeschwindigkeiten von mindestens 300 Metern pro Minute zu Fasern versponnen wird.

21. Verfahren nach Anspruch 1, wobei das Polyolefinpolymer einen Anfangsschmelzindex zwischen 2.5 und 10 aufweist.

22. Verfahren nach Anspruch 1, wobei Schritt b unter Verwendung einer Vorrichtung zum Aufbringen eines Spinnfinish durchgeführt wird.

23. Verfahren nach Anspruch 22, wobei das zur Katalyse der Hydrolysereaktion befähigte Material zunächst mit einem für die Faser vorgesehenen Spinnfinish vermischt wird.

24. Verfahren nach Anspruch 20, wobei das zur Katalyse der Hydrolysereaktion befähigte Material Titan (IV)-bis(acetylacetonat)düsopropoxid, Titan (IV)-tetrakis(2-ethyl-1,3-hexandiolat) oder [2,2-Bis(2-propenyloxy)methyl]-1-butanolato-O,O',O"]tris(neodecanoato-O)zirkonium ist.

## Revendications

1. Procédé de réticulation d'un polymère de type polyoléfine, comportant le fait de greffer un matériau de type silane, de formule R-Si-R'₃ dans laquelle R représente un groupe à insaturation éthylénique et R' représente un groupe hydrolysable, sur le polymère à base de polyoléfine en présence d'un amorceur générateur de radicaux libres, et amélioré en ce que, pour cette réaction de greffage, on ajuste le rapport molaire effectif du matériau de type silane aux radicaux libres à une valeur d'au moins 45/1,
lequel procédé comporte en outre les étapes suivantes :
a) filer, pour en faire une fibre, le polymère de type polyoléfine à silane greffé ;
b) appliquer sur la fibre un matériau capable de catalyser une réaction d'hydrolyse, sous l'action de l'humidité, des fragments de type silane greffés sur le polymère, lequel matériau est un composé de type zirconate ou titanate ;
c) et mettre la fibre en contact avec de l'humidité, dans des conditions appropriées pour promouvoir une réaction de réticulation.

2. Procédé conforme à la revendication 1, dans lequel le rapport molaire effectif du matériau de type silane aux radicaux libres vaut plus de 50/1.

3. Procédé conforme à la revendication 1, dans lequel l'amorceur générateur de radicaux libres est un matériau de type peroxyde.

4. Procédé conforme à la revendication 1, qui comporte en outre le fait de mettre le matériau de type polyoléfine issu du greffage en contact avec de l'humidité, dans des conditions appropriées pour qu'il se forme des liaisons chimiques entre au moins un certain nombre des fragments de type silane.

5. Procédé conforme à la revendication 1, qui comporte en outre le fait de limiter le taux de radicaux alcoxy utilisés dans la réaction de greffage à moins de 500 micromoles pour 100 grammes de polymère.

6. Procédé conforme à la revendication 1, dans lequel on file la polyoléfine en une fibre après la réaction de greffage, mais avant toute réaction notable de réticulation.

7. Procédé conforme à la revendication 1, dans lequel la polyoléfine est une polyoléfine obtenue par catalyse homogène et avec un catalyseur à site unique.

8. Procédé conforme à la revendication 7, dans lequel la polyoléfine obtenue par catalyse homogène et avec un catalyseur à site unique présente un indice de fluidité à chaud, mesuré selon la norme ASTM D-1238, conditions E (190 °C, 2,16 kg de charge), de 1 à 10.

9. Procédé conforme à la revendication 3, dans lequel on mélange intimement le silane, le peroxyde et le polymère avant le démarrage de la réaction de greffage.

10. Procédé conforme à la revendication 1, dans lequel on réalise la réaction de greffage dans une extrudeuse le long de laquelle on maintient un profil de température tel que le silane, le peroxyde et le polymère soient intimement mélangés avant le démarrage de la réaction de greffage.

11. Procédé conforme à la revendication 1, dans lequel la quantité de silane greffé représente moins de 3 % du poids du polymère issu du greffage.

12. Procédé conforme à la revendication 1, dans lequel la quantité de silane greffé représente moins de 2 % du poids du polymère issu du greffage.

13. Procédé conforme à la revendication 1, dans lequel le matériau de type silane est choisi parmi le vinyl-triméthoxy-silane (VTMOS) et le vinyl-triéthoxy-silane (VTEOS).

14. Procédé conforme à la revendication 3, dans lequel le matériau de type peroxyde est du 2,5-diméthyl-2,5-di(tertiobutyl-peroxy)-hexane.

15. Procédé conforme à la revendication 1, qui comporte en outre le fait d'ajouter des anti-oxydants.

16. Procédé conforme à la revendication 15, dans lequel les anti-oxydants sont incorporés dans le polymère, à sec ou à l'état fondu, après la réaction de greffage.

17. Procédé conforme à la revendication 1, dans lequel on fait en plus réticuler partiellement le polymère, par une méthode qui n'implique pas le greffage d'un silane.

18. Procédé conforme à la revendication 1, dans lequel le matériau de type polyoléfine présente, après le greffage, un indice de fluidité à chaud, mesuré selon la norme ASTM D-1238, conditions E (190 °C, 2,16 kg de charge), qui vaut au moins 80 % de l'indice de fluidité à chaud du matériau de type polyoléfine avant greffage.

19. Procédé conforme à la revendication 1, dans lequel le matériau de type polyoléfine présente, après le greffage, un indice de fluidité à chaud, mesuré selon la norme ASTM D-1238, conditions E (190 °C, 2,16 kg de charge), qui vaut au moins 90 % de l'indice de fluidité à chaud du matériau de type polyoléfine avant greffage.

20. Procédé conforme à la revendication 1, dans lequel le polymère de type polyoléfine à silane greffé est filé en une fibre à une vitesse en ligne d'au moins 300 mètres par minute.

21. Procédé conforme à la revendication 1, dans lequel le polymère de type polyoléfine présente initialement un indice de fluidité à chaud de 2,5 à 10.

22. Procédé conforme à la revendication 1, dans lequel on effectue l'étape (b) en se servant d'un applicateur d'apprêt de filage.

23. Procédé conforme à la revendication 22, dans lequel le matériau capable de catalyser la réaction d'hydrolyse est préalablement mélangé avec un apprêt de filage destiné à la fibre.

24. Procédé conforme à la revendication 20, dans lequel le matériau capable de catalyser la réaction d'hydrolyse est du bis(acétylacétonate) de diisopropoxy-titane-(IV), du tétrakis(2-éthyl-1,3-hexanediolate de titane-(IV), ou du [2,2-bis[(2-propényloxy)méthyl]1-butanolato-O,O',O"]tris(néo-décanoato-O)zirconium.
